# EUROPEAN PATENT APPLICATION

(11) **EP 1 780 621 A1**
(43) Date of publication of application: **02.05.2007**
(21) Application number: 05077457.9
(22) Date of filing: 25.10.2005
(51) Int. Cl.: G05B 19/418

(54) **Method for the treatment of a panel, system and computer program product therefore**

(71) Applicant: Intellametric B.V., 3162 RA Rhoon (NL)
(72) Inventor: Smychliaev, Iaroslav V., 3162 RA Rhoon (NL)
(74) Representative: Winckels, Johannes Hubertus F.

(57) **Abstract**

Method for the treatment of a panel (1) before, during and/or after edge banding of the panel, wherein during work preparation (9) data is attributed to the panel, wherein the panel is identified and at least a part of the corresponding data is linked to and presented on an operator interface (14) at or near the location for treatment of the panel.

## Description

The invention relates to a method for the treatment of a panel before, during and/or after edge banding of the panel, wherein during work preparation data is attributed to the panel.

Furthermore the invention relates to a system.

Furthermore the invention relates to a computer program product comprising computer software for operating an edge banding, trimming and/or finishing.

Manufacturers of furniture and/or manufacturers of (sub)products such as treated wooden panels benefit from IT-solutions to streamline production processes, reduce waste and errors in production. CAD/CAM (Computer Aided Design/Computer Aided Manufacturing) systems are typically used to define the finished product layout and generate part lists with the necessary information for all stages of manufacturing, such as CNC (Computerised Numerical Control) processing, sawing and assembling. Based on this information a sawing plan is developed and carried out on the sawing machines to produce panels. Thereafter further processing is required on the CNC-routers, edge banding machines, sanding machines, etc. and the workpieces are assembled and treated as required according to the product specifications by operators.

In the total manufacturing process, at the feeding of panels and/or bands to the edge banding apparatus many mistakes occur and the process is slowed down, in this way inducing costs. For example, problems occur when mistakes are made in the positioning orientation of the panel or the wrong shape of edge bands might be selected. Also, for example, mistakes are made in the sequence of feeding the panels and/or bands according to the specifications.

Fully automated edge banding process will not be cost efficient in the current manufacturing processes because panels and/or edge bands of varying sizes, shapes, materials and numbers need to be fed to the process. An operator will feed and/or install said panels and/or bands to the apparatus as part of the process.

Next to said edge banding process, the edges of edge bands and/or panel edges may be cut, sanded, flush trimmed, stripped, or treated in any other way. In general these and other treatments may be carried out in an edge banding apparatus, where the edge banding apparatus is provided with multiple apparatuses/tools for carrying out these treatments. Finishing processes for panel edges may occur at a different location than edge banding and/or at a different apparatus, but may as well occur at the edge banding apparatus. The mentioned problems of positioning and sequence concerns separate edge trimming and/or finishing as well.

The object of the invention is to reduce production time and/or production mistakes in said manufacturing process, more specifically right before, during and/or after banding, trimming and/or finishing the edge(s) of the panel.

At least one of these and other objects are achieved with a method according to the invention, characterized by the features of claim 1.

With a method according to the invention specific data is attributed to a type of panel during work preparation, by means of a computer. This data may be stored in a system and preferably contains information about the panel, its band(s), edges and treatments thereof, for example.

A method according to the invention makes the data, which is attributed to the panel during work preparation, conceivably and practically available for the operator at the location of treatment, so that production mistakes are reduced and the manufacturing process is expedited. This is made possible by advantageously identifying the panel to be treated at or near the location, so that the attributed information is retrieved and advantageously presented near the location of treatment, preferably at the edge banding and/or edge sanding apparatus. This may be presented somewhere on the operator interface, preferably on a screen.

By providing the interface (link) between the work preparation and the location of treatment the operator may be provided with advantageous feedback to conveniently and efficiently be able to sequentially position the panels and/or bands of multiple sizes, shapes, materials, amounts, etc. The operator may visually verify the orientation, shape and order of the panels and/or bands to be treated with the aid of the presentation of specific attributed data. This data can be retrieved by said identification.

A person skilled in the art will recognize the various treatments that are carried out near the edge banding location, oftentimes with the same machine, or at least, the same process line. Also he will recognise that an edge banding apparatus in general carries multiple types of tools, for example, cutters, gluing tools, temperature tools, sanding tools, etc.

In general, the invention may be advantageously applicable for those treatments that concern the treating of edge bands and/or the edge of a panel, where the band(s) and/or at least one of the panel edges is fed to an edge treating apparatus. In this description, edge treatment comprises edge banding as well as edge sanding, trimming and similar edge finishing processes.

Also the method according to the invention may be carried out multiple times in the same manufacturing process and may be spread out over different distant locations. This may depend on how edge banding , trimming and/or finishing is carried out. Therefore, the invention may comprise multiple locations of treatment where multiple (sub)apparatuses are situated, since they need not be situated in the same apparatus.

Furthermore, a method according to the invention makes it possible to advantageously support the operator, while flexibility in the edge treatment process in maintained. For example, changes can be made in and/or during the edge treatment processes, such as flipping the panel because one side is damaged. In practice, during manufacturing processes visual inspection or interfering in the process might be desirable for multiple reasons that can't be predicted. In many (semi)automated solutions, this is oftentimes neglected.

In an advantageous embodiment the data that is presented at the location of treatment may comprise edge data. This data may be computerised, for example manually, during work preparation. At least a part of this data may for example also be retrieved from CAD/CAM data, such as part lists for example. In practice, a substantial part of the edge data will be entered in the computer separately during work preparation because it isn't included in the CAD/CAM data. In this advantageous embodiment, the edge data may for example be presented on screen next to the corresponding edge(s) and panel, so that production mistakes may be reduced. Edge data may for example comprise information like orientation of the panel and/or edges, order of the bands (order of treatments, such as gluing of the edges), band material (e.g. PVC), edge thickness/height, edge profile (rectangle, round, slant, round upper side with straight bottom, slant upper side with straight bottom, etc.), radius (for example if the edge has a round profile), angle (if the edge has a slant profile), colour, texture, etc. By computerising and exchanging edge data it's possible to readily support the operator of the edge treatment process and thereby enhance the manufacturing process.

In another advantageous embodiment, the data that is presented at the location of treatment may comprise panel data, preferably panel data as well as edge data. The panel data may for example be digitally retrieved from the CAD/CAM data. This data may for example comprise workpiece name (e.g. door, drawer side panel, etc.), material (e.g. specific type of wood, specific type of plastic, etc.), measurements, color, texture, etc.

In an advantageous embodiment specific panel and edge data that concerns the treatment is presented such that the operator receives just the right type of information for carrying out the right procedure.

In another advantageous embodiment the data is presented in a 3D (3 dimensional) way. This is a most cost efficient and convenient way of presenting the work preparation data at the location of treatment. For example, CAD/CAM data, that may be pre-processed or not, may be retrieved at identification of the panel and presented in said 3D way at the location of treatment of the panel and/or edges. The link between a 3D graphically presented panel and the panel and/or edge band to be fed to the edge treatment process in a specific orientation is made conveniently fast, thereby causing a more expedited manufacturing process while mistakes are avoided.

In another advantageous embodiment the operator may install, set, exchange, etc. one or multiple subapparatuses, i.e. aggregates, corresponding to the type of treatment. This may be based on the panel and/or edge data that is presented at the treatment site.

In a preferred embodiment identification is made possible with a sticker that may be conveniently placed onto a panel. This sticker may for example comprise a type of ID, such as a bar code or RFID (radiofrequency identification) chip. Near the treatment site, the sticker may be scanned, e.g. by a barcode reader or a RFID scanner, such that the data that corresponds with the panel and/or edges and/or treatments is presented on a screen.

Furthermore the invention relates to a system, characterized by the features of claim 10.

Such a system comprises at least an edge banding, trimming and/or finishing apparatus at the location of treatment. Such apparatuses are generally known in the art and may comprise multiple and different apparatuses such as gluing apparatuses, band processing apparatuses, holder tools, mover tools, cutting tools, milling tools, sanding tools, temperature tools etc. Furthermore, a system according to the invention comprises a database. This database may store the data that is generated during work preparation.

Identification means are provided to identify a panel. Identification means may for example comprise optical recognition means such as algorithms and cameras or for example stickers with barcodes and barcodes readers. After identifying with the aid of identification means, specific data is retrieved from the database and is made available on an operator interface. The specific type of data is presented and selected such that the operator knows when and how to treat a specific panel and/or edge band at the location of treatment. The database, identification means and the operator interface are conveniently linked to each other, such that data is conveniently exchanged.

Furthermore with a system according to the invention one or multiple apparatuses that are provided may be exchanged, installed and set according to the presented data on the operator interface. For example, control means may be provided at the operator interface to control specific apparatuses according to the data that is presented, or the operator might preset the (sub)apparatuses manually and mechanically. In this way the panel edge and/or edge band may be treated according to the specifications, which are readily delivered at the location of treatment.

Operator support is provided so that mistakes are reduced and production is expedited. This is made possible by making work preparation data readily available near the location of treatment, at or near the edge banding, trimming and/or finishing apparatus.

In an advantageous embodiment, the panel and/or edge data that is presented at or near the location of treatment comprises panel and/or edge and/or band texture information. The panel and/or edge(band) texture information that is presented on the operator interface may correspond to the texture of the panel and/or edge(band).

In another advantageous embodiment the texture may be presented on the operator interface, such that the orientation of the panel to be treated may be retrieved from the screen information. For example, if the panel may comprises more or less longitudinal nerves, on screen a texture with longitudinal nerves may be shown, such that the operator knows how to position the panel. The same principle may apply to edge bands that have to be fed to the apparatus.

In a preferred embodiment, the operator interface may comprise 3D visualisation means to conveniently support the operator in positioning the panel and/or edge band in the apparatus.

In another advantageous embodiment, the operator interface may comprise means to interact with the data that is presented on screen. For example, the operator may change, add and/or retrieve specific data or change the orientation of 3D information on screen.

Furthermore, a preferred embodiment of a system according to the invention comprises a touch screen, wherein the operator may readily interact with the information presented on screen.

In other embodiments according to the invention, the system provides network connections between different components, such that different devices may communicate and the invention may function optimally. Network connections may comprise WANs (Wide Area Network), LANs (Local Area Networks), wireless networks, etc.

Furthermore the invention relates to a computer program product comprising computer software for operating an edge banding, trimming and/or finishing apparatus characterized by the features of claim 21.

A computer program product according to the invention may support edge banding, trimming and/or finishing apparatuses of multiple types, existing apparatuses as well as newly developed ones.

In general, a method, system and/or computer program product according to the invention has a convenient modularity that may be applied to separate apparatuses in edge treatment processes as well as single apparatuses that may or may not be equipped with multiple subapparatuses.

### Brief description of the drawings:

Figure 1 shows schematic drawings of examples of parts of panels that are provided with an edge band;
Figure 2 shows schematic drawings of examples of top views of panels;
Figure 3 shows schematic drawings of examples of edge profiles;
Figure 4 shows a schematic drawing of an example of an edge banding apparatus;
Figure 5 shows a flow diagram of an edge banding, trimming and/or finishing process;
Figure 6 shows an example of a screenshot of a touch screen of an edge banding apparatus.

In this description, identical or corresponding parts have identical or corresponding reference numerals. The exemplary embodiments shown should not be construed to be limitative in any manner and serve merely as illustration.

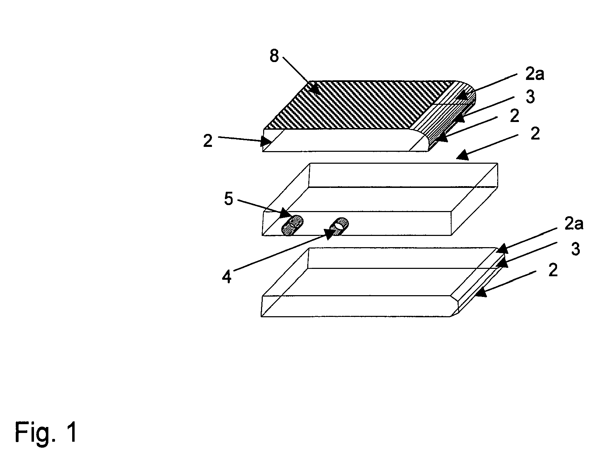

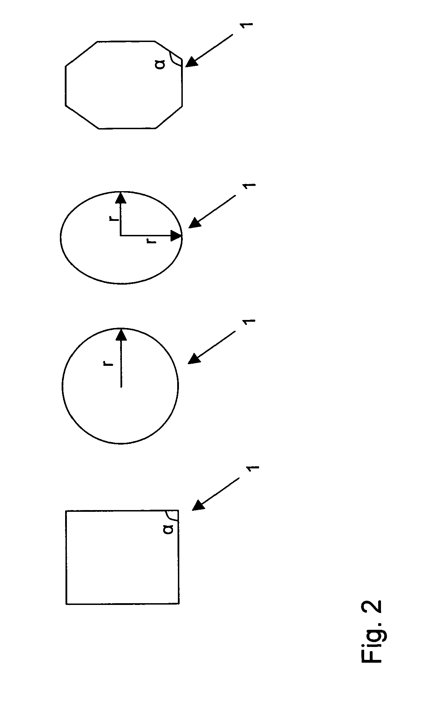

In industry for the processing of panels 1 it is known to treat the edges 2 of panels 1 for example for aesthetic finishing, for providing the right measurements/tolerances and/or for connecting with other parts. For these and other ends, the edges 2 of panels 1 may be provided with specific profiles, grooves, slots 5, protrusions 4, rounded and/or slanted edges, edge bands 3, etc. This is shown in figure 1. Such panels 1 may for example be prepared to function as a part of furniture and may comprise wooden material, although panels 1 that substantially comprise plastics are also known. The shapes of different panels 1 may vary substantially, as can be seen from figure 2. The top view may for example be at least partly round and/or straight edged and in principle may have any number of different and/or the same angles α and/or diameters r.

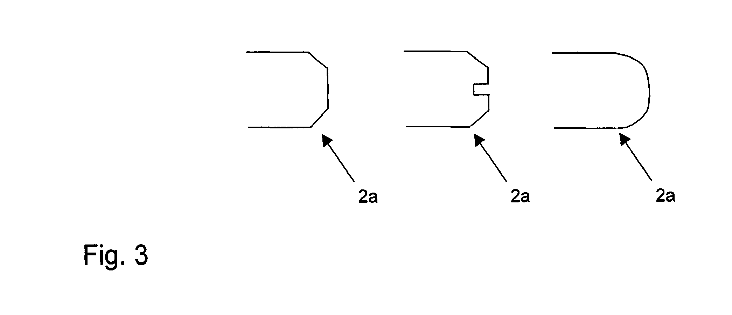

The edges 2a may be at least partly rounded and/or slanted to form various profiles as can for example be seen from figure 1 and/or 3. Edge bands 3 may be attached to the edges 2 of various profiles. Edge bands 3 may comprise a strip of plastic material or wood, etc and may be provided with a texture 8, visually and/or tangibly. Generally, an edge band 3 is pre-treated before it is attached to a panel 1, these pre-treatments may for example include gluing, cutting, painting, trimming, etc.

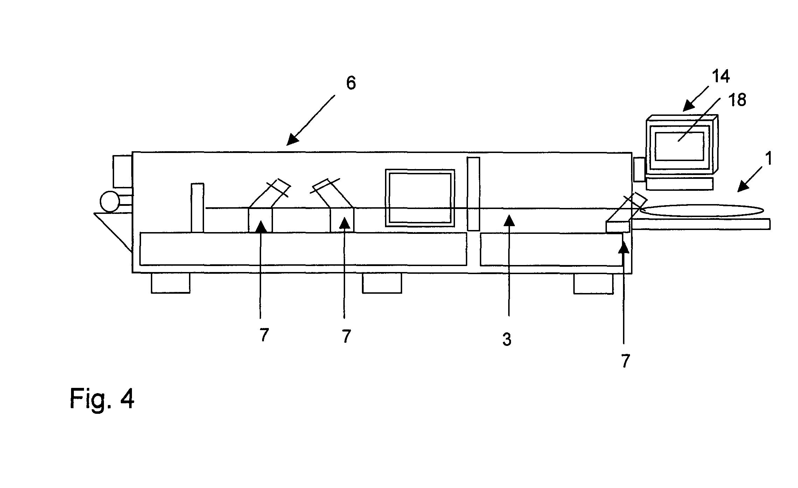

Abovementioned treatments may be carried out by one or more edge banding apparatuses 6. In figure 4 an example of a known edge banding apparatus 6 is shown, provided with subapparatuses 7 to treat the edges 2 and/or edge bands 3 of panels 1, examples of which may be cutters, flush trimmers, drills, sanders, gluing devices, temperature devices, mills, and more. The treatments of these subapparatuses 7 may be referred to by "trimming" and/or "finishing". To treat the edges 2 and/or edge bands 3 of panels 1 of various specifications, for example in size, shape and/or profile, etc. an edge banding apparatus 6 is preferably, but not necessarily, provided with multiple subapparatuses 7. It is also possible that various edge treatments are carried out by apparatuses that are separated from the edge banding apparatus 6, instead of and/or in addition to subapparatuses 7.

To carry out the various edge banding, trimming and/or finishing treatments to various types panel edges 2 and/or edge bands 3 the edge banding process is constructed in a modular way. For example, the subapparatuses 7 can be exchanged for the edge treatment process to perform specific treatments in a specific sequence according to predetermined edge specifications. The edge specifications are oftentimes determined during work preparation 9 and edge banding apparatus 6 is preferably set accordingly.

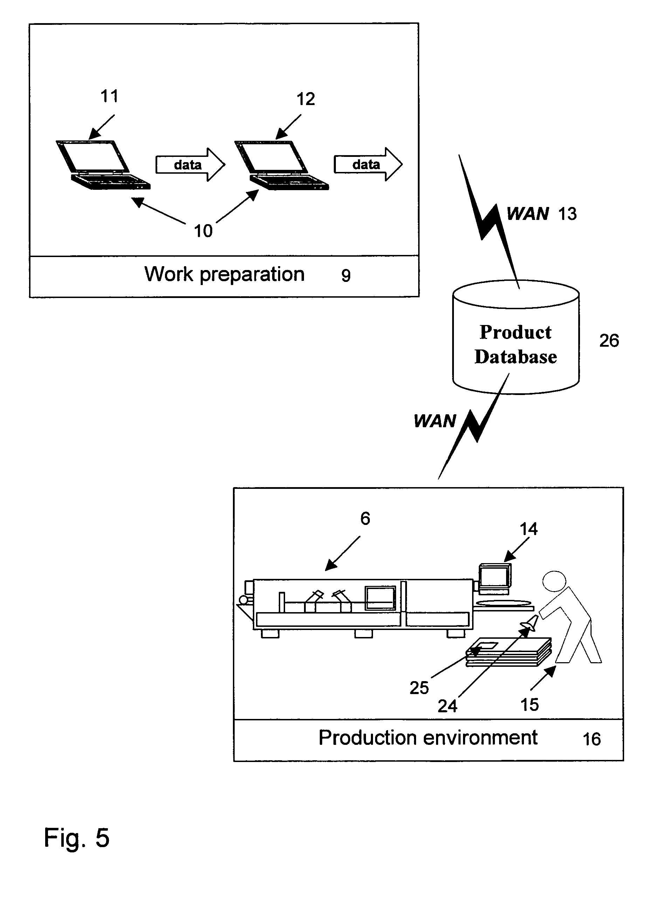

As can be seen from figure 5, the specifications are set during work preparation 9. To set the specifications, data 10 is entered into and/or transferred to a computer. In a practical embodiment, the data 10 may comprise panel data 11 and edge data 12. This panel data 11 may for example comprise panel design data such as workpiece name (e.g. door, drawer side panel, etc.), material (e.g. specific type of wood, specific type of plastic, etc.), 3D product data, measurements, colour, texture, etc. This may for example be entered into a computer during the CAD/CAM design phase.

Furthermore, edge data 12 may be entered into the computer during the work preparation. Edge data 12 may for example comprise information like orientation of the panel and/or edges, order of the bands (order of treatments, such as gluing of the edges), band material (e.g. PVC), edge thickness/height, edge profile (rectangle, round, slant, round upper side with straight bottom, slant upper side with straight bottom, etc.), radius (for example if the edge has a round profile), angle (if the edge has a slant profile), colour, texture, etc. The edge data may be entered manually and for this, for example, a kind of digital form may be presented to make sure that the right edge data is provided by an operator.

The contents of panel data 11 and edge data 12 may vary. In an advantageous embodiment, the data 10 is transferred to a database 26.

During work preparation, before the panels 1 and edge bands 3 are delivered at the edge banding site, an ID 25 may be formed. In a preferred embodiment the ID 25 is printed in the form of a barcode sticker, which may also display a number and/or some sort of code. The ID 25 may be attached and/or linked to a specific panel 1 and/or edge band 3. The ID 25 may also be attached and/or linked to a number of panels 1 and/or edge bands 3. The ID 25 shall also digitally or otherwise refer to specific data 10 that is stored in a computer, preferably the database 26, which data 10 preferably corresponds with the specific (number of) panel(s) 1 and/or band(s) 3.

Data 10 may be retrievably stored in the database 26 by means of a network 13. Such a network 13 may be supported by wired and/or wireless means such as bluetooth, Wireless Fidelity, WAN, LAN, internet, etc. in which it is possible to exchange data 10.

In the production environment 16, the edge banding apparatus 6 may be connected to the same network 13 and comprises an operator interface 14. The operator interface 14 may give indications for the operator 15 as well as serve as operating/controlling means for an edge treating apparatus 6 or subapparatus 7. Therefore, next to controlling means it may comprise a screen 18. In other words, the operator interface 14 may be an interactive tool to be used as a support means for the operator 15 as well as an edge banding controlling means.

When a panel 1 is delivered near the edge banding location, the operator may scan the ID 25 that is attached to the panel 1 by means of identification means 24. In a preferred embodiment the ID 25 may comprise a barcode sticker and the identification means 24 a barcode scanner, although many other configurations are possible, such as, but not limited to, Radiofrequency ID scanning, any form of optical recognition, etc. For example, the operator may also choose to enter a number or code that is present on the ID 25 in the operator interface 14. By scanning the ID 25 and/or entering by means of the identification means 24 and/or the operator interface 14, specific data 10 that corresponds to ID 25 and thus to panel 1 and/or band 3 may be presented on screen 18.

The data 10 may be shown on the operator interface 14 in a convenient way such that it supports the operator in choosing the orientation and/or sequence of the panel(s) 1 and/or edge bands 3, setting the multiple apparatuses 6 and subapparatuses 7 and/or determining the sequence of the treatments. To support the operator 15 and the manufacturing process more optimally interactive means 17 may for example be integrated with the operator interface 14, as can be seen from figure 5.

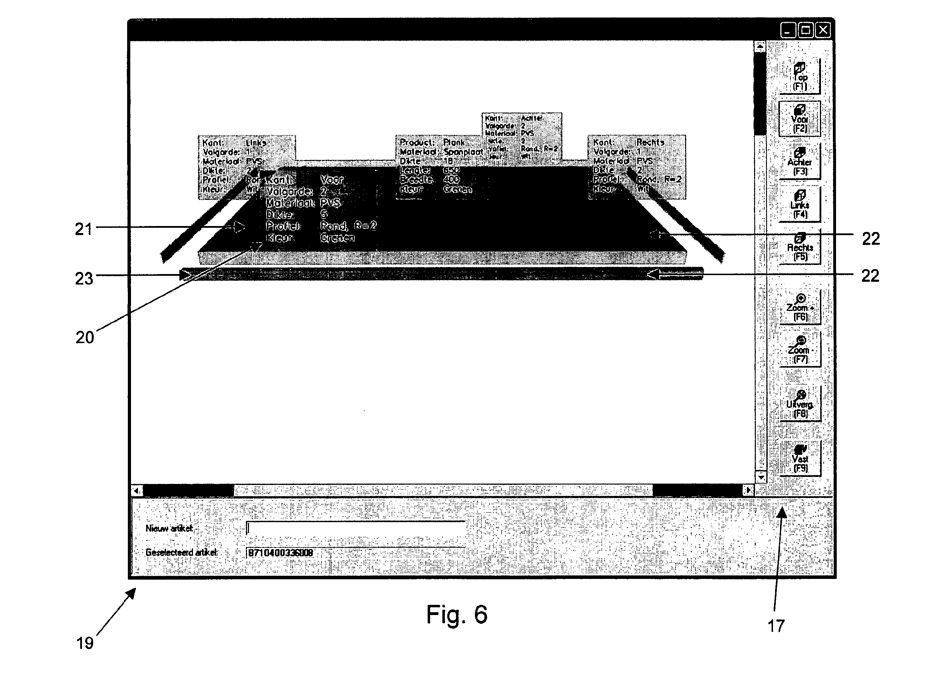

Figure 6 represents an example of a screenshot 19 of a touch screen 18. In the example, at the right side, interactive means 17 are indicated, for controlling the position and/or contents of the data 10 that is present on screen 18. At least a part of the data 10 may be conveniently presented on screen 18 in a 3D way with the aid of a not shown hard- and/or software interface that makes the data 10 readily available for the edge banding apparatus 6. The touch screen 18 conveniently allows the operator to change the orientation of the 3D panel and/or edge bands 3 and swiftly indicate which type of data 10 he may want to be indicated on screen.

At an earlier stage, panel data 11 and/or edge data 12 may be entered into the computer, preferably in such a way that it can be readily converted by said hard- and/or software interface. Said converting may be done in such a way that the information presented on screen is conveniently presented and may be manipulated, for example with the aid of said touch screen 18.

At least a part of said data 10 may be presented in a 3D way on the screen. As may be seen from figure 6, a displayed panel 21 and to be attached edge bands 23 are represented in a 3D way, on screen. The orientation of the 3D displayed panel 21 and/or edge bands 23 may correspond with the orientation of the panel 1 and/or edge bands 3 to be treated. Also near the indicated panel 21 and/or bands 23 displayed on screen 18, data 10 that corresponds with the specific edge band 3 and/or edge 2 and/or panel 1 may be indicated, for example by means of symbols 20 as can be seen from figure 6. In this way, for example, the relative length of specific edge bands 3 and/or panels 1 is indicated, in this way supporting the operator in feeding the panels 1 and/or bands 3. In this way it is prevented that panels 1 and/or edge bands 3 are not positioned in the specified orientation and/or sequence and manufacturing errors may be prevented.

A texture 22 on the panel 21 and/or edge bands 23 on screen comprises an additional way to support the orientation and/or sequence of positioning the panel 1 and/or edge bands 3 on the edge banding apparatus 6. In this way the positioning orientation of the panel 1 and/or edge bands 3 for the edge banding apparatus 6 may be more apparent to the operator 15, thereby the manufacturing process is improved.

In practice, the operator 15 may intervene the edge treating process or change the specifications, for example by means of the operator interface 14. For example when a fabrication error can be seen on the panel 1 and/or on an edge 2 and/or band 3, the operator 15 may flip the panel 1, such that the error can only be seen on the backside, where it is less apparent. For this and other kinds of interacting during the edge treatment process, the edge treating method according to the invention may offer the type of flexibility that is required.

It shall be obvious that the invention is not limited in any manner to the exemplary embodiments that are represented in the description and the drawings. Many variation are possible within the framework of the invention as outlined by the claims. For instance, other ID means 24, 25, other though similar apparatuses 6, other (sub)apparatuses/tools 7, and/or other types of operator interfaces may be provided within the scope of the invention. All comparable variations are understood to fall within the framework of the invention as outlined by the claims.

## Claims

1. Method for the treatment of a panel before, during and/or after edge banding of the panel, wherein during work preparation data is attributed to the panel, wherein the panel is identified and at least a part of the corresponding data is linked to and presented on an operator interface at or near the location for treatment of the panel.

2. Method according to claim 1, wherein said data comprises edge data.

3. Method according to claim 1 or 2, wherein said data comprises panel data.

4. Method according to any one of the preceding claims, wherein at least a part of said data is presented with the aid of three dimensional visualisation.

5. Method according to any one of the preceding claims, wherein the panel is positioned corresponding to the presented data.

6. Method according to any one of the preceding claims, wherein an edge band is positioned corresponding to the presented data.

7. Method according to any one of the preceding claims, wherein aggregates are set corresponding to the presented data.

8. Method according to any one of the preceding claims, wherein during work preparation an identification sticker is added to the panel.

9. Method according to one of the preceding claims, wherein identification is performed by scanning.

10. System for the use in an edge banding, trimming and/or finishing apparatus, provided with at least a database, identification means for linking data from the database to a corresponding panel and an operator interface, wherein the operator interface is connected to the identification means such that it presents said data of a corresponding panel with the aid of the identification means at or near said apparatus.

11. System according to claim 10, wherein said data comprises edge data.

12. System according to claim 10 or 11, wherein said data comprises panel data.

13. System according to any one of the claims 10 - 12, wherein said data comprises texture information.

14. System according to claim 13, wherein the texture information corresponds with the panel orientation.

15. System according to any one of the claims 10 - 14, wherein the operator interface comprises three dimensional visualisation means for visualising said data in a substantially three dimensional way.

16. System according to any one of the claims 10 - 15, wherein the operator interface is provided with interactive means for presenting specific data from the database.

17. System according to any one of the claims 10 - 16, wherein the operator interface comprises a touch screen.

18. System according to any one of the claims 10 - 17, wherein the identification means comprise a sticker.

19. System according to any one of the claims 10 - 18, wherein the database and the operator interface are linked to the same network.

20. System according to any one of the claims 10 - 19, wherein the database and a CAD/CAM system and /or edge data input means are linked to the same network.

21. Computer program product comprising computer software for operating an edge banding, trimming and/or finishing apparatus, comprising:
- a software part for linking identification means of a panel to be edge banded, trimmed and/or finished to an apparatus for edge banding, trimming and/or finishing; and
- visualisation means for visualising an image of a panel to be edge banded, trimmed and/or finished.
